# EUROPEAN PATENT APPLICATION

(11) **EP 4 144 825 A1**
(43) Date of publication of application: **08.03.2023**
(21) Application number: 22193538.0
(22) Date of filing: 01.09.2022
(51) Int. Cl.: C12G 1/06, C12G 1/08

(54) **METHOD FOR PRODUCING SPARKLING WINE AND WINE THUS OBTAINED**

(30) Priority: 01.09.2021 IT 202100022733
(71) Applicant: Quotavini S.r.l., 31100 Treviso (TV) (IT)
(72) Inventor: GAVA, Fabrizio, 31010 GODEGA DI SANT'URBANO (TV) (IT)
(74) Representative: Negrini, Elena

(57) **Abstract**

A method for producing sparkling wine made starting from a base wine obtained from a first must, obtained in turn by the crushing of first bunches of grapes followed by a first fermentation and a first filtration.

Said method comprises the steps of:
- harvesting second bunches of grapes;
- letting the second bunches of grapes wither for 120 days, in an environment at an average temperature of 16 °C and average relative humidity of 75%;
- crushing the withered second bunches, thus obtaining a second must with a sugar content of 350 g/l;
- decanting the second must, to obtain a decanted must, at the temperature of 6 °C, for about 2 days;
- mixing, in a closed container, a predefined quantity of the base wine with a quantity of the decanted must in the percentage of 8%, to obtain a sparkling blend;
- maintaining the sparkling blend inside the closed container for about 120 days, to allow for a second fermentation of sugars, essentially of the decanted must, so to produce mainly carbon dioxide which causes an increase in the pressure of the sparkling blend inside the closed container up to 6 bar, at the end of the residence time of the sparkling blend in the closed container, and obtaining a sparkling wine.

## Description

### TECHNICAL FIELD

The present invention is part of the food sector of wine production and in particular it refers to a method for producing sparkling wine and wine thus obtained.

### PRIOR ART

At least two methods are known for the production of sparkling wines: the so-called "classic" or "traditional" method which involves refermentation in the bottle and the so-called "Italian" or "Martinotti" or "Martinotti-Charmat" method which is based on refermentation in an autoclave.

The Italian method provides that the "base wine" is obtained from so-called "neutral" grapes of the type Moscato, Glera, Malvasia, Brachetto, or similar. The base wine, of the so-called "still" type, is clarified and filtered (i.e. stabilized), then it is poured into an autoclave in which a predefined quantity of selected yeasts added with cane or beet sugar has been introduced, in order to induce a refermentation of the base wine in the autoclave.

This refermentation or so-called "prise de mousse" takes place in about 7-21 days and causes the production of carbon dioxide which remains trapped within the base wine enclosed inside the autoclave. The pressure in the autoclave increases, varying from 1 bar to 9 bar, so as to transform the base wine (normally "still") into sparkling or bubbly wine, or simply said "spumante", rich in so-called "bubbles".

The spumante is cooled to interrupt fermentation at a predetermined residual sugar value and to cause the precipitation of tartrates, then it is filtered again and corrected, i.e. it is added with sugar syrup and/or aromatic mixture (the so-called "liqueur") before being bottled and corked for subsequent use.

The main disadvantage of the known Italian method lies in that the sparkling wine is obtained by adding sugar, cane or beet, whose origin differs from that of the base wine and therefore with different organoleptic characteristics.

Another disadvantage of the known Italian method is that the sparkling wine is obtained by adding refined sugars that require laborious and expensive procedures for their extraction, refining, purification and crystallization.

The document titled "Enologia: con elementi di chimica viticolo-enologica" (ISBN: 8862926103) by Giuseppe Sicheri describes a method comprising three subsequent fermentations for producing the sparkling wine Vernaccia di Serrapetrona. This method provides for harvesting a predetermined quantity of grapes, of which a maximum of 60% is fermented to obtain a base wine, and the remaining quantity is slightly withered. In January the withered grapes are added to the base wine and fermented therewith. Later on the prise de mousse is performed in an autoclave by adding yeast and sugar.

Said document exclusively teaches:
- to employ three different fermentations in subsequent steps;
- to add the withered grapes to the base wine in order to obtain the second fermentation;
- to put the base wine and the withered grapes into an autoclave with the addition of sugar, obviously of different origin from that of the base and withered grapes, for the third fermentation and the prise de mousse.

The web page at the address https://www.quattrocalici.it/denominazioni/vernaccia-di-serrapetrona-docg/ describes a method comprising three different fermentations for producing the sparkling wine Vernaccia di Serrapetrona. This method provides for harvesting a predetermined quantity of red grapes, of which at least 85% is Vernaccia Nera variety. A portion of said grapes is employed in producing a base wine, while the remaining portion is withered until January. A must is obtained from the withered grapes, which is added and fermented together with the base wine. After at least two months sugars and yeasts are added to the wine obtained for the prise de mousse in an autoclave.

This document as well teaches exclusively:
- to employ three different fermentations to be carried out in subsequent steps;
- to add the must obtained from the withered grapes to the base wine in order to obtain a wine by means of a second fermentation;
- to put in an autoclave the wine obtained with the addition of sugar, obviously of different origin from that of the base and withered grapes, for the prise de mousse.

Both the cited documents substantially describe a method based on three distinct fermentations, with the evident disadvantage of rendering such method laborious and characterized by a great number of different operations.

Furthermore, the method described in said documents always provides for adding sugars foreign to the grapes employed in the production of the sparkling wine, with the consequent disadvantage that the organoleptic properties of the grapes employed are modified by the presence of refined sugars.

### DISCLOSURE OF THE INVENTION

An object of the present invention is to propose a method for producing sparkling wine using exclusively pressed grapes and exploiting the sugars naturally present in grapes for refermentation and correction of the sparkling wine.

### BEST MODE OF CARRYING OUT THE INVENTION

The present invention relates to a method for producing sparkling wine produced starting from a base wine obtained from a first must. This first must is obtained by the crushing of first bunches of grapes followed by a first fermentation and a first filtration.

The method essentially involves the steps of:
- harvesting second bunches of grapes, manually or mechanically, during the grape ripening period;
- placing the second bunches of grapes in containers for withering;
- letting the second bunches of grapes wither or dry in a time interval varying from 30 to 210 days, preferably about 120 days, in an environment at a temperature varying between 5 °C and 35 °C, preferably 16 °C, and relative humidity varying between 55% and 95%, preferably 75%;
- crushing the withered second bunches, thus obtaining a second must with a sugar content varying from 100 g/l to 450 g/l, preferably 350 g/l;
- decanting the second must, to obtain a decanted must, at a temperature varying from 0 °C to 10 °C, preferably 6 °C, for a time interval varying from 1 day to 5 days, preferably about 2 days;
- mixing, in a closed container, a predefined quantity of the base wine with a quantity of the decanted must in a percentage varying from 4% to 20% by volume, preferably 8%, to obtain a sparkling blend;
- maintaining the sparkling blend in the closed container for a variable time interval of at least 30 days, preferably about 120 days, to allow for a second fermentation of the sugars, almost exclusively of the decanted must and to a marginal extent of the base wine, able to produce mainly carbon dioxide which causes an increase in the pressure of the sparkling blend inside the closed container varying from 1 bar to 9 bar, preferably 6 bar, at the end of the residence time of the sparkling blend in the closed container, and obtaining a sparkling wine with a sugar content varying from 0,1 g/l to 150 g/l, preferably about 10 g/l.

The second bunches of grapes are preferably loose, that is, well open, with grapes well separated and not close together; these loose bunches are particularly suitable for withering, by virtue of their particular conformation which considerably reduces the risk of mould development.

The second bunches of grapes, intended for withering, are preferably harvested about 3-10 days, preferably 7 days, before the harvest of the first bunches for the production of the base wine, as the prolonged maturation on the vine involves a significant increase in the risk of mould formation and deterioration of the grapes due to pathogenic and/or climatic agents.

The containers for withering are, for example, specific perforated crates, racks or trays with a mesh or grid bottom.

The environment in which the second bunches of grapes are withered is for example a room provided with natural or forced ventilation, with controlled temperature and humidity values or naturally comprised within the aforementioned ranges. These environmental conditions are necessary to ensure effective withering of the grapes and prevent rot thereof.

The time interval and the environmental conditions relating to withering determine its extent, that is, they determine the percentage of water evaporated from the second bunches and consequently the concentration of sugars in the withered second bunches and in the second must obtained by crushing thereof.

A variant of the method provides that the step of crushing the withered second bunches is preceded by a destemming step, aimed at separating the stalks of the bunches from the grapes intended for crushing.

In the preferred embodiment of the method, the closed container is an autoclave resistant to high pressures, at least up to about 9 bar.

The sparkling wine obtained with the method described above is a cloudy sparkling wine with residues from the second fermentation.

Another variant of the method also comprises the step of filtering the sparkling wine to obtain a stabilized sparkling wine.

This filtration step aims at removing from the sparkling wine the unwanted solid residues of the second fermentation, the so-called "lees", to interrupt the fermentation and reduce the turbidity of the sparkling wine. These residues can appear in suspension in the sparkling wine or settle on the bottom of the autoclave.

The filtration of the sparkling wine essentially consists of known operations of clarification and/or sterile filtration.

The sparkling wine, stabilized or not, is then packaged into glass containers, which are preferably bottles with capacity ranging from 0,15 l to 9 l, preferably 0,75 l or 1,5 l, resistant to high pressures. Once filled with the sparkling wine, each bottle is closed with a sealing cap.

The decanted must contains a modest quantity of indigenous yeasts, sufficient in itself to spontaneously initiate and conduct the second fermentation of the sugars present in the sparkling blend. However, it is possible to favor and control this second fermentation by using selected oenological yeasts.

To this end, a variant of the method also provides, in a step prior to maintaining the sparkling blend in the closed container, for adding to the base wine or to the sparkling blend a quantity of oenological yeasts varying from 1 g to 30 g, preferably 10 g, per 100 l of base wine.

This method, in a further variant thereof, also provides for adding further decanted must to the sparkling wine in a percentage by volume varying between 0,5% and 6%, preferably 3%, to raise the sugar content of the sparkling wine to a predetermined desired value and enhance the flavor qualities of the sparkling wine.

Another variant of the method also provides, in a step prior to maintaining the sparkling blend in the closed container, for adding to the base wine or sparkling blend a quantity of sugar varying from 10 g to 50 g, preferably 25 g, per liter of base wine. This addition of sugar is essentially aimed at increasing the final pressure of the sparkling wine, for example in the case the sugar concentration in the decanted must is too low to guarantee a predetermined final pressure of the sparkling wine.

A further variant of the method also provides for adding to the sparkling blend or to the sparkling wine a quantity of sulphites, such as sulfur dioxide and/or metasulphites, varying from 0,01 g/l to 0,3 g/l, preferably 0,1 g/l.

The presence of sulphites in the wine limits its oxidation, preserving its organoleptic properties.

A further variant of the method provides that the decanted must is kept in a closed container for refinement, preferably a wooden barrel or a jar or an amphora, for at least 15 days, preferably 60 days, in a step prior to mixing the base wine with the decanted must. This step is aimed at allowing the decanted must to modify its own organoleptic features and to assimilate from the container some particular aromatic notes that will remain appreciable also in the sparkling wine thus obtained.

The decanted must thus refined can be used in the sparkling blend for the second fermentation, and/or in the sparkling wine to raise the residual sugar thereof.

The pressure of the sparkling wine is essentially determined by the sugar content of the second must, by the percentage of this decanted second must added to the base wine, by the quantity and type of yeasts acting in the second fermentation, and by the residence time of the sparkling blend inside the autoclave.

In a second embodiment of the method for producing sparkling wine, the closed container is a glass container resistant to high pressures, preferably a bottle, and coincides with the bottle in which the sparkling wine is packaged.

In this case, the second fermentation takes place directly in said packaging bottle, and the fermentation residues remain in the sparkling wine packaged in the bottle until it is enjoyed.

In a variant of its second embodiment, the method further comprises the steps of:
- removing the waste solid residues of the second fermentation, present as particulate in suspension or deposited on the walls of the bottle, from the sparkling wine in the glass container;
- topping up the sparkling wine in the glass container with a filling excipient, to fill the bottle up again and give the sparkling wine particular aromatic notes;
- closing the glass container again to obtain a stabilized sparkling wine, with a cork fit to keep the sparkling wine under pressure and to close the bottle until the sparkling wine is enjoyed.

The removal of the residues of the second fermentation, so-called "disgorgement", involves making the lees of the sparkling wine accumulate by decantation near to the bottle cork, then momentarily opening the bottle letting the lees come out, possibly locally frozen, thanks to the pressure of the wine.

The step of removing the residues from the sparkling wine in the bottle is almost analogous to that of filtering the sparkling wine in the autoclave.

Topping up the sparkling wine in the bottle essentially consists in filling with an excipient the volume left by the lees following their expulsion.

This excipient, or so-called "liqueur d'expedition", includes for example the same sparkling wine or another wine, and/or sugar, and/or liqueur, and/or aromas, and the like.

In a variant of the second embodiment of the method, the excipient comprises the decanted must refined in the closed container.

The present invention also relates to the sparkling wine obtained by the method described above. In this sparkling wine, the first and/or the second bunches of grapes are of white grape varieties, such as Glera, Ribolla, Perera, Verdiso, Bianchetta, Pinot Blanc, Chardonnay, Malvasia, Malvasia d'Istria and similar, and/or red grape varieties, such as Pinot Noir, Pinot Gris, Merlot, Cabernet, Refosco, and similar.

For example, by mixing a base wine obtained from first bunches of white grapes with a decanted second must obtained from second bunches of red grapes, the sparkling wine obtained by the method described is of the so-called "rose" type. Other combinations of grape varieties for the first and second bunches will lead to sparkling wines of different shades, white, red or rose.

It is highlighted that the sparkling wine is obtained exclusively by means of sugars naturally occurring in the first and second bunches of grapes, i.e. without employing sugars derived from sources foreign to said grapes, that is, extracted from other vegetables, such as beetroots and canes, and/or refined, for example chemically or mechanically extracted. Advantageously, this allows for confining and directly correlating the origin of the organoleptic properties of the sparkling wine to the organoleptic properties of the grapes employed in the production thereof.

Some preferred approximate and non-limiting examples of practical implementation of the method for producing the sparkling wine according to the invention are described below.

### Example 1

200 kg of second loose bunches of white grapes of Glera variety are harvested and placed on the bottom of perforated agricultural crates, so that each crate contains a single layer of non-overlapping bunches.

The crates containing the second bunches of grapes are placed in a warehouse equipped with forced ventilation. Said second bunches are left to wither in the warehouse for 120 days, at an average temperature of 16 °C in the 4 months of withering from September to December, and at a relative humidity kept almost constant at 75%.

The second bunches of grapes thus withered are pressed to obtain 36 l of second must, whose sugar content is measured in 350 g/l.

The second must is decanted for 2 days at a temperature of 6 °C obtaining 34 l of decanted second must, as 2 l of solid residues have been removed from the 36 l of the initial second must.

250 l of base wine, obtained starting from Glera variety grapes and 10% of Pinot Grigio variety, are mixed with 19 l of the decanted second must, equal to 7,6% of the volume of the base wine, and 25 g of oenological yeasts inside an autoclave with a capacity of 300 l and resistant up to a pressure of 9 bar.

The sparkling blend thus obtained is kept fermenting in the autoclave for about 120 days, i.e. in the 4 months from January to April, at the usual fermentation temperature of 16-18 °C.

At the end of the second fermentation or prise de mousse, the sparkling wine is obtained, whose pressure in the autoclave reaches 6 bar.

The sparkling wine is added with 20 mg/l of sulfur dioxide, that is 5,38 g in total for the 269 l of sparkling wine obtained. In this way a sparkling wine is obtained with a sugar content of less than 1 g/l, therefore classified as a "pas dose" or "brut nature" or "zero dosage" sparkling wine.

The sparkling wine is then filtered, thus obtaining the pas dose stabilized sparkling wine, which is bottled into 0,75 l and 1,5 l bottles.

A similar procedure in which 7,7 l of decanted second must are added before filtering the sparkling wine, i.e. 2,9% of the volume of the sparkling wine, gives a sparkling wine with a sugar content of 10 g/l, therefore classified as a "brut" sparkling wine.

### Example 2

200 kg of second loose bunches of white grapes of Glera variety are harvested and deposited on the bottom of perforated agricultural crates suitable for withering grapes.

The crates containing the second bunches of grapes are placed in a warehouse equipped with forced ventilation. These second bunches are left to dry in the warehouse for 185 days, at an average temperature of 12 °C, and at a relative humidity kept almost constant at 80%.

The second bunches of grapes thus withered are crushed to obtain 34 l of second must, whose measured sugar content is 360 g/l.

The second must is decanted for 1 day at a temperature of 5 °C obtaining 31 l of decanted second must, as 3 l of lees have been discarded from the 34 l of the initial second must.

250 l of base wine, obtained from Glera variety grapes, are mixed with 18 l of the decanted second must, equal to 7,2% of the volume of the base wine, and 28 g of oenological yeasts in an autoclave with a capacity of 300 l and resistant up to a pressure of 9 bar.

The sparkling blend thus obtained is kept to ferment in the autoclave for about 120 days, at an ambient temperature of 18-20 °C.

At the end of the second fermentation the sparkling wine is obtained, whose pressure in the autoclave reaches 6 bar.

The sparkling wine is added with 20 mg/l of sulfur dioxide, i.e. 5,36 g overall for the 268 l of sparkling wine obtained, and 7,5 l of decanted second must, i.e. 2,8% of the volume of the sparkling wine. In this way a brut sparkling wine with a sugar content of 10 g/l is obtained.

The sparkling wine is then filtered, thus obtaining the stabilized brut sparkling wine, which is bottled in bottles of 0,20 l, 0,375 l and 0,75 l.

### Example 3

200 kg of second bunches of white grapes of the Ribolla Gialla and Malvasia d'Istria varieties (weight ratio 1: 1) are harvested and placed, not overlapping with one another, on the bottom of perforated crates to favor withering.

The crates are then stacked in a warehouse for withering with forced ventilation and controlled average temperature of 18 °C and humidity varying between 73% and 78%. The grapes remain to wither for 155 days.

The withered second bunches of grapes are crushed, being destemmed and pressed, obtaining 35 l of second must, whose measured sugar content is 400 g/l.

The second must is decanted for 3 days at a temperature of 5 °C obtaining 33 l of decanted second must, as 2 l of solid residues have been removed from the 35 l of the initial second must.

The decanted second must is placed and left to refine in a wooden barrel, preferably sessile oak, for 60 days, absorbing its aromas.

250 l of base wine, obtained from grapes of the Ribolla Gialla variety, are mixed with 16,5 l of the decanted second must, equal to 6,6% of the volume of the base wine, and 25 g of oenological yeasts inside an autoclave with a capacity of 300 l and resistant up to a pressure of 9 bar.

The sparkling blend thus obtained is kept to ferment in the autoclave for about 90 days, that is 3 months, at the usual fermentation temperature of 16-18 °C.At the end of the second fermentation the sparkling wine is obtained, whose pressure in the autoclave reaches 5,5 bar.

10 l of decanted second must are added to the sparkling wine, that is 3,75% of the volume of the sparkling wine. In this way a sparkling wine with a sugar content of 15 g/l is obtained, classified as an "extra dry" sparkling wine.

The sparkling wine is then filtered, thus obtaining the stabilized extra dry sparkling wine, which is bottled in bottles of 0,20 1, 0,375 l, 0,75 l, 1,5 l and 3 l.

## Claims

1. Method for producing sparkling wine made starting from a base wine obtained from a first must, obtained in turn by the crushing of first bunches of grapes followed by a first fermentation and a first filtration, said method being **characterized in that** it comprises the steps of:
- harvesting second bunches of grapes;
- letting the second bunches of grapes wither in a time interval varying from 30 to 240 days, preferably about 120 days, in an environment at a temperature varying between 5 °C and 35 °C, preferably 16 °C, and relative humidity varying between 55% and 95%, preferably 75%;
- pressing the withered second bunches, thus obtaining a second must with a sugar content varying between 100 g/l and 450 g/l, preferably 350 g/l;
- decanting the second must, to obtain a decanted must, at a temperature varying between 0 °C and 10 °C, preferably 6 °C, for a time interval varying from 1 day to 5 days, preferably about 2 days;
- mixing, in a closed container, a predefined quantity of the base wine with a quantity of the decanted must in a percentage varying from 4% to 20% by volume, preferably 8%, to obtain a sparkling blend;
- maintaining the sparkling blend inside the closed container for at least 30 days, preferably about 120 days, to allow for a second fermentation of sugars, essentially of the decanted must, so to produce mainly carbon dioxide which causes an increase in the pressure of the sparkling blend inside the closed container varying from 1 bar to 9 bar, preferably 6 bar, at the end of the residence time of the sparkling blend in the closed container, and obtaining a sparkling wine with a sugar content varying from 0,1 g/l to 150 g/l, preferably about 10 g/l.

2. Method according to claim 1 **characterized by** adding to the sparkling wine further decanted must, in a volume percentage varying between 0,5% and 6%, preferably 3%, to increase the sugar content of the sparkling wine to a target value.

3. Method according to any one of the preceding claims **characterized in that** the decanted must is kept in a closed container for refinement, preferably a barrel or a jar, for at least 15 days, preferably 60 days, prior to mixing the base wine with the decanted must.

4. Method according to any one of the preceding claims **characterized in that** the step of crushing the withered second bunches is preceded by a destemming step.

5. Method according to any one of claims from 1 to 4 **characterized in that** the closed container is an autoclave resistant to high pressures, at least up to about 9 bar.

6. Method according to claim 5 **characterized in that** it also comprises at least one filtration step of the sparkling wine to obtain a stabilized sparkling wine.

7. Method according to claim 5 or 6 **characterized by** packaging the sparkling wine, stabilized or not, into glass containers, preferably bottles with capacity ranging between 0,15 l and 9 l, preferably 0,75 l or 1,5 l.

8. Method according to any one of claims from 1 to 4 **characterized in that** the closed container is a glass container resistant to high pressures.

9. Method according to claim 8 **characterized in that** it further comprises the following steps:
- removing the residues of the second fermentation from the sparkling wine in the glass container;
- topping up the sparkling wine in the glass container with a filling excipient;
- closing the glass container to obtain a stabilized sparkling wine.

10. Method according to any one of the preceding claims **characterized by** adding to the base wine and/or to the sparkling blend a quantity of oenological yeasts varying from 1 g to 30 g, preferably 10 g, per 100 l of base wine, in a step prior to maintaining the sparkling blend in the closed container.

11. Method according to any one of the preceding claims **characterized by** adding to the sparkling blend and/or to the sparkling wine a quantity of sulphites, such as sulfur dioxide and/or metasulphites, varying from 0,01 g/l to 0,3 g/l, preferably 0,1 g/l.

12. Method according to any one of the preceding claims **characterized by** adding to the base wine and/or sparkling blend a quantity of sugar varying from 10 g to 50 g, preferably 25 g, per liter of base wine, in a step prior to maintaining the sparkling blend in the closed container.

13. Sparkling wine, stabilized or not, obtained by the method according to any one of the preceding claims **characterized in that** the first and/or the second bunches of grapes are of white grape varieties, such as Glera, Ribolla, Perera, Verdiso, Bianchetta, Pinot Blanc, Chardonnay, Malvasia, Malvasia d'Istria and similar, and/or red grape varieties, such as Pinot Noir, Pinot Gris, Merlot, Cabernet, Refosco, and similar.

14. Sparkling wine according to claim 13 **characterized in that** it is obtained exclusively by sugars naturally occurring in the first and second bunches of grapes employed in the production of said sparkling wine, i.e. not derived and/or extracted from foreign sources.

15. Sparkling wine according to claim 13 or 14 **characterized in that** it is of the so-called "white" or "rose" or "red" type.
